# EUROPEAN PATENT APPLICATION

(11) **EP 3 831 908 A1**
(43) Date of publication of application: **09.06.2021**
(21) Application number: 19845519.8
(22) Date of filing: 19.07.2019
(51) Int. Cl.: C09J 183/07, B32B 27/00, C09J 7/35, C09J 7/38, C09J 11/04, C09J 11/06

(54) **SILICONE ADHESIVE AGENT COMPOSITION, AND ADHESIVE TAPE OR ADHESIVE FILM USING SAME**

(30) Priority: 01.08.2018 JP 2018144949
(71) Applicant: SHIN-ETSU CHEMICAL CO., LTD., Tokyo 100-0004 (JP)
(72) Inventor: KURODA Yasuyoshi, Annaka-shi, Gunma 379-0224 (JP)
(74) Representative: Mewburn Ellis LLP
(86) International application number: PCT/JP2019/028417
(87) International publication number: WO 2020/026844

(57) **Abstract**

A silicone adhesive agent composition contains
(A) alkenyl group-containing diorganopolysiloxane,
(B) resin having an R¹₃SiO_{1/2} unit (each occurrence of R¹ represents a monovalent hydrocarbon group which does not have an aliphatic unsaturated bond. The same applies to R¹ described below.) and a SiO_{4/2} unit,
(C) alkenyl group-containing diorganopolysiloxane,
(D)
(D-1) resinous copolymer having an R⁴₃SiO_{1/2} unit (each occurrence of R⁴ represents a monovalent hydrocarbon group which does not have an aliphatic unsaturated bond, or an alkenyl group, and at least one of all occurrences of R⁴ is an alkenyl group) and a SiO_{4/2} unit and/or
(D-2) resinous copolymer having an R¹₃SiO_{1/2} unit, an R¹R⁵SiO_{2/2} unit (R⁵ represents an alkenyl group.), and a SiO_{4/2} unit,

(E) organohydrogen polysiloxane, and
(G) platinum-based catalyst (platinum group metal-based catalyst).

## Description

### TECHNICAL FIELD

The present invention relates to a silicone pressure-sensitive adhesive composition. More specifically, it relates to a silicone pressure-sensitive adhesive composition that gives a pressure-sensitive adhesive layer which, even without carrying out primer treatment, has an excellent performance in terms of adherence to a backing, and relates also to silicone pressure-sensitive tape and pressure-sensitive film.

### BACKGROUND ART

Products composed of a silicone pressure-sensitive adhesive of excellent heat resistance which is coated/laminated onto a backing made of plastic film such as polyester film or polyimide film have hitherto been used as heat-resistant pressure-sensitive adhesive tapes. Such pressure-sensitive tape is generally taken up into a roll; when the tape is vigorously unwound at the time of use, the silicone adhesive layer sometimes separates from the backing. Also, when the pressure-sensitive tape is cut, sometimes only the backing tears and the layer of silicone adhesive, instead of being severed, stretches into strings, or the layer of silicone adhesive lifts from the backing. Silicone pressure-sensitive adhesive layers in the prior art thus have the drawbacks of separating from the backing and stringiness.

When such a layer of pressure-sensitive adhesive is used in pressure-sensitive tape, problems sometimes arise; that is, adherence between the layer of silicone pressure-sensitive adhesive and a plastic film backing has hardly been adequate. Hence, a method for improving adherence between the film backing and the layer of silicone pressure-sensitive adhesive by coating the backing with, as an adhesion promoter, a carbon functional silane-based primer composition and then applying the silicone pressure-sensitive adhesive has generally been used. However, the resulting adherence of the adhesive to the backing fails to be satisfactory.

For this reason, numerous primer compositions that use organopolysiloxanes have been described for inducing silicone pressure-sensitive adhesives to adhere to plastic film. For example, Patent Document 1 discloses a primer composition that contains a diorganopolysiloxane having hydroxyl groups at both ends of the molecular chain, an organohydrogenpolysiloxane and an organotin carboxylate, and Patent Document 2 discloses a primer composition that contains a diorganopolysiloxane having hydroxyl groups at both ends of the molecular chain, an organohydrogenpolysiloxane, a hydrolysable silyl group-containing vinyl and/or acrylic copolymer, and an organotin carboxylate.

However, satisfactory adherence sometimes cannot be obtained regardless of the primer composition used. Moreover, carrying out primer treatment requires that pressure-sensitive adhesive coating be carried out following primer treatment. In order to do so, it is necessary either to use a special coating device that in-line coats the primer and the layer of pressure-sensitive adhesive, or to carry out a two-step coating process in which a backing that has been coated once with the primer is coated again with the pressure-sensitive adhesive. Unfortunately, both of these approaches have disadvantages in terms of productivity and cost.

Patent Document 3 describes a silicone pressure-sensitive adhesive composition whose adherence to a backing has been improved by adding to the composition an alkenyl group-containing organopolysiloxane having a viscosity of from 20 to 500 mPa·s. However, in this art, the adherence of the adhesive composition to the backing sometimes decreases with storage under high temperature and humidity.

Patent Document 4 and Patent Document 5 describe adherence-to-backing promoters that can be added to silicone pressure-sensitive adhesive compositions. However, although these are effective for improving the adherence of a layer of pressure-sensitive adhesive to a backing, when storage under high temperature and humidity at 85°C and 85% relative humidity is carried out, the adherence of the adhesive to the backing sometimes decreases over time, so that the layer of pressure-sensitive adhesive may fall off the backing.

### PRIOR ART DOCUMENTS

### PATENT DOCUMENTS

Patent Document 1: JP-B S54-44017
Patent Document 2: JP-B H06-39584
Patent Document 3: JP-A 2009-256542
Patent Document 4: JP-A 2010-500462
Patent Document 5: JP-A 2015-178584

### SUMMARY OF THE INVENTION

### TECHNICAL PROBLEM

In view of the above circumstances, an object of this invention is to provide a silicone pressure-sensitive adhesive composition which gives a layer of pressure-sensitive adhesive that does not require primer treatment and that has a good adherence to a backing when only the silicone pressure-sensitive adhesive composition is coated thereon and is able to maintain such adherence, and moreover for which the adhesive strength does not rise over time even under storage at high temperature and high moisture. A further object is to provide a silicone pressure-sensitive tape or pressure-sensitive film using such a composition.

### SOLUTION TO THE PROBLEM

The inventor has conducted extensive investigations aimed at achieving these objects and discovered as a result that a silicone pressure-sensitive adhesive which uses (D) an alkenyl group-containing organopolysiloxane resin, and preferably uses both (C) an alkenyl group-containing silicone oil and (D) an alkenyl group-containing organopolysiloxane resin, when rendered into a silicone pressure-sensitive tape or silicone pressure-sensitive film, has an adherence to the backing and a durability of such adherence that are excellent, and therefore can be advantageously used. This discovery ultimately led to the present invention.

Accordingly, the present invention provides the following addition reaction-curable silicone pressure-sensitive adhesive composition and pressure-sensitive tape or pressure-sensitive film.
[1] An addition reaction-curable silicone pressure-sensitive adhesive composition which includes:
   (A) from 20 to 100 parts by weight of
      (A-1) a linear diorganopolysiloxane containing at least two alkenyl groups per molecule and having a viscosity at 25°C of at least 10,000 mPa·s, or
      (A-2) a linear diorganopolysiloxane containing at least two alkenyl groups per molecule and having a viscosity at 25°C when diluted to 30 wt% with toluene of not more than 100,000 mPa·s;
   (B) from 80 to 0 parts by weight of an organopolysiloxane resin containing R¹₃SiO_{1/2} units (wherein R¹ represents like or unlike, substituted or unsubstituted monovalent hydrocarbon groups of 1 to 10 carbon atoms which have no aliphatic unsaturated bonds) and SiO_{4/2} units in a molar ratio, expressed as R¹₃SiO_{1/2} units/SiO_{4/2} units, of from 0.6 to 1.7 (with the proviso that the sum of components (A) and (B) is 100 parts by weight);
   (C) from 0 to 200 parts by weight of a diorganopolysiloxane having at least two alkenyl groups per molecule, an alkenyl group content of from 0.00003 to 0.00015 mol/g, and a viscosity at 25°C of at least 500 mPa·s but less than 10,000 mPa·s;
   (D)
      (D-1) from 5 to 200 parts by weight of a resinous copolymer which contains R⁴₃SiO_{1/2} units (wherein R⁴ represents like or unlike, substituted or unsubstituted monovalent hydrocarbon groups of 1 to 10 carbon atoms which have no aliphatic unsaturated bonds, at least one of all occurrences of R⁴ being an alkenyl group) and SiO_{4/2} groups in a molar ratio, expressed as R⁴₃SiO_{1/2} units/SiO_{4/2} units, of from 0.6 to 1.7, and wherein the total amount of alkenyl groups is at least 0.00001 mol/g, and/or
      (D-2) from 5 to 100 parts by weight of a resinous copolymer which contains R¹₃SiO_{1/2} units (wherein R¹ is as defined above), R¹R⁵SiO_{2/2} units (wherein R¹ is as defined above and R⁵ is an alkenyl group) and SiO_{4/2} groups in a molar ratio, expressed as R¹₃SiO_{1/2} units/SiO_{4/2} units, of from 0.6 to 1.7, and wherein the total amount of alkenyl groups is at least 0.00001 mol/g
         (with the proviso that the total amount of components (C) and (D) per 100 parts by weight of the total amount of components (A) and (B) is from 5 to 200 parts by weight);
   (E) an organohydrogenpolysiloxane containing at least two SiH groups per molecule, in an amount such that the molar ratio of SiH groups in component (E) relative to the combined amount of alkenyl groups in component (A), alkenyl groups in component (C) and alkenyl groups in component (D) is from 0.5 to 5; and
   (G) an effective amount of a platinum catalyst (platinum group metal catalyst).
[2] The silicone pressure-sensitive adhesive composition of [1], further including (F) from 0 to 8 parts by weight of a reaction regulator per 100 parts by weight of the sum of components (A), (B), (C), (D) and (E).
[3] The silicone pressure-sensitive adhesive composition of [1] or [2], wherein both ends of the diorganopolysiloxane of component (C) are capped with alkenyl groups.
[4] The silicone pressure-sensitive adhesive composition of any of [1] to [3], wherein the content of component (C) is from 1 to 200 parts by weight per 100 parts by weight of the sum of components (A) and (B).
[5] A pressure-sensitive tape or pressure-sensitive film having a backing and, laminated onto at least one side of the backing, a pressure-sensitive adhesive layer made up of a cured form of the silicone pressure-sensitive adhesive composition of any one of [1] to [4].
[6] The pressure-sensitive tape or pressure-sensitive film of [5] having at least one of the following properties (1) to (3):
   (1) In cases where the pressure-sensitive tape or pressure-sensitive film of [5] has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, when this pressure-sensitive tape or pressure-sensitive film is pressed against and bonded to the surface of a plastic film or glass plate and stored at 85°C and 85% relative humidity for 20 hours, a 2 mm slit is subsequently inserted at the center on one widthwise edge of the backing of this pressure-sensitive tape or pressure-sensitive film and both lengthwise ends of the pressure-sensitive tape or pressure-sensitive film are held and pulled in the lengthwise direction, the backing tears at the slit without severing of the pressure-sensitive adhesive layer and, even when the pressure-sensitive adhesive layer is then further pulled in the lengthwise direction, lifting of the pressure-sensitive adhesive layer from the backing does not arise;
   (2) In cases where the pressure-sensitive tape or pressure-sensitive film of [5] has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, when this pressure-sensitive tape or pressure-sensitive film is pressed against and bonded to the surface of a plastic film or glass plate and stored at 85°C and 85% relative humidity for 20 hours, a 2 mm slit is subsequently inserted at the center on one widthwise edge of the backing of this pressure-sensitive tape or pressure-sensitive film and both lengthwise ends of the pressure-sensitive tape or pressure-sensitive film are held and pulled in the lengthwise direction, the backing tears at the slit without severing of the pressure-sensitive adhesive layer and, even when the pressure-sensitive adhesive layer is then further pulled in the lengthwise direction, the amount of elongation of the pressure-sensitive adhesive layer until it breaks is 5 mm or less;
   (3) In cases where the pressure-sensitive tape or pressure-sensitive film of [5] has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, even when the surface of the pressure-sensitive adhesive layer is scratched and the surface is vigorously rubbed with the fingers, the pressure-sensitive adhesive layer does not fall off.

### ADVANTAGEOUS EFFECTS OF THE INVENTION

The silicone pressure-sensitive adhesive composition of the invention gives a pressure-sensitive tape or pressure-sensitive film in which the composition has an adherence to the tape backing and a durability thereof that are both excellent. This pressure-sensitive tape or pressure-sensitive film can be suitably used as a heat-resistant silicone tape, a tape for masking electronic components, or a pressure-sensitive tape or pressure-sensitive film for the screen protection of electronic devices such as touch panels or for manufacturing operations.

### DESCRIPTION OF EMBODIMENTS

The inventive silicone pressure-sensitive adhesive composition having adherence to a backing is a composition which includes (D) an alkenyl group-containing organopolysiloxane resin, and preferably includes both (C) an alkenyl group-containing organopolysiloxane oil and (D) an alkenyl group-containing organopolysiloxane resin. The silicone pressure-sensitive adhesive composition of the invention is an addition reaction-curable organopolysiloxane composition.

Components (A) to (G) of the silicone pressure-sensitive adhesive composition of the invention are described in detail below.

### Component (A)

Component (A) is a substantially linear diorganopolysiloxane which (A-1) has at least two alkenyl groups per molecule and a viscosity at 25°C of at least 10,000 mPa·s, or (A-2) has at least two alkenyl groups per molecule and a viscosity at 25°C when diluted to 30 wt% with toluene of not more than 100,000 mPa·s. One of formula (1) or (2) below is preferred. 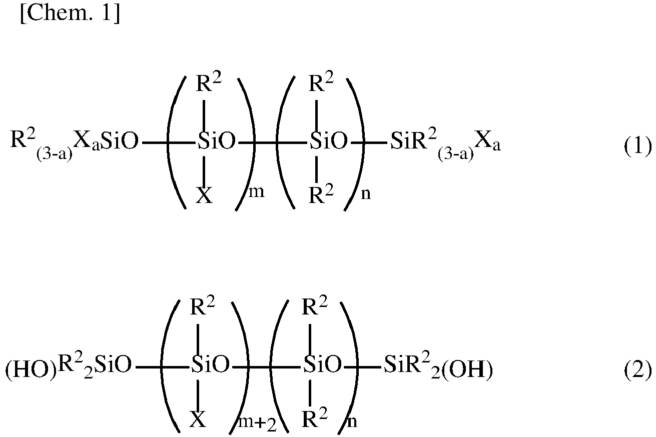 (wherein each R² is independently a monovalent hydrocarbon group that has no aliphatic unsaturated bonds, each X is independently an alkenyl group-containing monovalent organic group, "a" is an integer from 0 to 3, "m" is a number of 0 or more and "n" is a number of 100 or more, with the provisos that "a" and "m" are not both at the same time 0, and that the sum m+n is a number such that the viscosity at 25°C of the diorganopolysiloxane of formula (1) or (2) is at least 10,000 mPa·s or a number such that the viscosity at 25°C when diluted to 30 wt% with toluene is not more than 100,000 mPa·s)

In the above formulas, R² is a monovalent hydrocarbon group of preferably 1 to 10 carbon atoms, and more preferably 1 to 6 carbon atoms, that has no aliphatic unsaturated bonds. Examples include alkyl groups such as methyl, ethyl, propyl and butyl groups, cycloalkyl groups such as the cyclohexyl group, and aryl groups such as phenyl and tolyl groups. An alkyl group such as methyl or a phenyl group is especially preferred.

The alkenyl group-containing monovalent organic group represented by X is an organic group of preferably 2 to 10 carbon atoms, and more preferably 2 to 6 carbon atoms. Examples include alkenyl groups such as vinyl, allyl, hexenyl and octenyl groups; (meth)acryloylalkyl groups such as acryloylpropyl, acryloylmethyl and methacryloylpropyl groups; (meth)acryloxyalkyl groups such as acryloxypropyl, acryloxymethyl, methacryloxypropyl and methacryloxymethyl groups; and alkenyl group-containing monovalent hydrocarbon groups such as cyclohexenylethyl and vinyloxypropyl groups. Industrially, a vinyl group is especially preferred,

Also, "a" is an integer from 0 to 3, and is preferably 1, "m" is a number of 0 or more, and "n" is a number of 100 or more. However, "a" and "m" are not both at the same time 0, and the sum m+n is a number such as to set the viscosity at 25°C of the diorganopolysiloxane of formula (1) or (2) to at least 10,000 mPa·s, preferably at least 20,000 mPa·s, and more preferably at least 30,000 mPa·s. This viscosity has no particular upper limit, so long as it is a number that gives a crude rubber-like diorganopolysiloxane which generally is not self-flowing at 25°C. In this invention, the viscosity indicates a value measured with a rotational viscometer.

This alkenyl group-containing linear diorganopolysiloxane may be oil-like or crude rubber-like in nature.

When component (A) is an oil-like ingredient, the viscosity at 25°C is at least 10,000 mPa·s, and preferably at least 20,000 mPa·s (component (A-1)). At a viscosity below 10,000 mPa·s, crosslinking of the cured product proceeds and flexibility is lost, as a result of which an adhesive strength is not longer manifested. When component (A) is a crude rubber-like ingredient, the viscosity at 25°C is generally at least 1,000,000 mPa·s, and especially at least 10,000,000 mPa·s. In this case, the viscosity when diluted with toluene should be in the range described below.

The ingredient used as component (A) may be one which, when dissolved in toluene to a concentration of 30 wt%, has a viscosity at 25°C of not more than 100,000 mPa·s, more preferably not more than 50,000 mPa·s, and even more preferably not more than 30,000 mPa·s (component (A-2)). If the viscosity at 25°C when dissolved in toluene to a concentration of 30 wt% exceeds 100,000 mPa·s, the viscosity becomes too high, making stirring at the time of production difficult.

The alkenyl group content of this alkenyl group-containing linear diorganopolysiloxane is preferably in the range of 0.000005 to 0.0001 mol/g, more preferably 0.000005 to 0.00007 mol/g, and even more preferably 0.00001 to 0.00005 mol/g. At an alkenyl group content of less than 0.000005 mol/g, the curability of the resulting pressure-sensitive adhesive composition may be inadequate. At a content greater than 0.0001 mol/g, the flexibility of the cured composition may decrease and the adhesive force may be inadequate.

The alkenyl groups on this alkenyl group-containing diorganopolysiloxane may be located at the ends of the molecular chain or only at the interior of the molecular chain, although it is preferable for the ends of the molecular chain to be capped with alkenyl groups. This is because alkenyl groups at the ends of the molecular chain have a good reactivity, enabling the reaction to be brought to completion in a short time.

The amount of component (A) included in the composition is from 20 to 100 parts by weight, and preferably from 30 to 95 parts by weight, so long as it is included in such a way that the combined amount of component (A) and the subsequently described component (B) is 100 parts by weight.

Component (A) may be of one type used alone, or may be of two or more types used together.

### Component (B)

Component B is an organopolysiloxane resin containing R¹₃SiO_{1/2} units (wherein R¹ represents like or unlike, substituted or unsubstituted monovalent hydrocarbon groups of 1 to 10 carbon atoms which have no aliphatic unsaturated bonds) and SiO_{4/2} units in a molar ratio, expressed as R¹₃SiO_{1/2} units/SiO_{4/2} units, of from 0.6 to 1.7.

R¹ represents like or unlike, substituted or unsubstituted monovalent hydrocarbon groups of 1 to 10 carbon atoms, and preferably 1 to 6 carbon atoms, which have no aliphatic unsaturated bonds. Examples include alkyl groups such as methyl, ethyl, propyl, isopropyl, butyl, isobutyl, tert-butyl, pentyl, neopentyl, hexyl, octyl, nonyl and decyl groups; cycloalkyl groups such as the cyclohexyl group; aryl groups such as phenyl, tolyl, xylyl and naphthyl groups; aralkyl groups such as benzyl, phenylethyl and phenylpropyl groups; and any of these groups in which some or all hydrogen atoms are substituted with halogen atoms such as fluorine, bromine or chlorine atoms, or with cyano groups, examples of which include chloromethyl, chloropropyl, bromoethyl, trifluoropropyl and cyanoethyl groups. Of these, methyl groups are preferred.

The molar ratio (R¹₃SiO_{1/2} units/SiO_{4/2} units) of R¹₃SiO_{1/2} units and SiO_{4/2} units in component (B) is from 0.6 to 1.7, and preferably from 0.6 to 1.2. When the molar ratio R¹₃SiO_{1/2} units/SiO_{4/2} units is less than 0.6, the adhesive strength and tack decrease; when it is more than 1.7, the adhesive strength and holding power decrease.

It is essential for component (B) to have R¹₃SiO_{1/2} units and SiO_{4/2} units. However, within a range that does not detract from the properties of the invention, R¹SiO_{3/2} units and/or R¹₂SiO_{2/2} units may also be included in component (B).

Component (B) may include, aside from the R¹ groups, OH groups. When OH groups are included, the content thereof is preferably not more than 4.0 wt%. At an OH group content of more than 4.0 wt%, the curability of the pressure-sensitive adhesive composition decreases, which is undesirable.

Component (B) typically consists solely of R¹₃SiO_{1/2} units and SiO_{4/2} units.

Component (B) has a polystyrene-equivalent weight-average molecular weight, as determined by gel permeation chromatography, which is preferably from 1,000 to 10,000, and more preferably from 2,000 to 8,000.

The amount of component (B) included in the composition is from 0 to 80 parts by weight. When component (B) is included, the amount thereof is preferably from 1 to 70 parts by weight, and more preferably from 5 to 70 parts by weight, provided that component (B) is included in such a way that the combined amount of components (A) and (B) is 100 parts by weight.

Component (B) may be of one type used alone, or two or more types may be used together.

When component (B) is included, a simple mixture of components (A) and (B) may be used or, when component (A) includes a diorganopolysiloxane of formula (2) 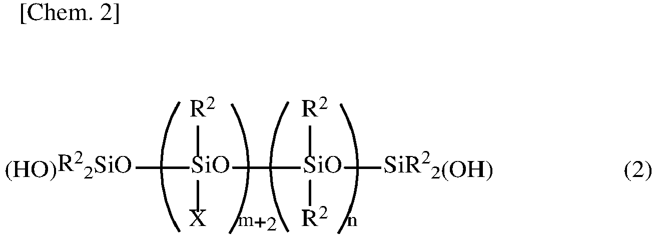 (wherein R² and X are the same groups as mentioned above, and "m" and "n" are the same numbers as mentioned above), component (A) and component (B) may be used as a condensation reaction product. To carry out the condensation reaction, a mixture of components (A) and (B) dissolved in a solvent such as toluene may, with the use of an alkaline catalyst, be reacted at room temperature and under refluxing.

The weight ratio in which components (A) and (B) are included is set to preferably from 20/80 to 100/0, more preferably from 30/70 to 100/0, and especially from 30/70 to 95/5. When the diorganopolysiloxane serving as component (A) is included in a weight ratio lower than 20/80, the pressure-sensitive adhesive composition may have a decreased tack and may be unable to stick to the adherend.

### Component (C)

Component (C) is a diorganopolysiloxane (oil) having at least two alkenyl groups per molecule, an alkenyl group content of from 0.00003 to 0.00015 mol/g, and a viscosity at 25°C of at least 500 mPa·s but less than 10,000 mPa·s.

This alkenyl group-containing diorganopolysiloxane may be linear or branched, with component (C) preferably being a diorganopolysiloxane of formula (3) or (4) below. 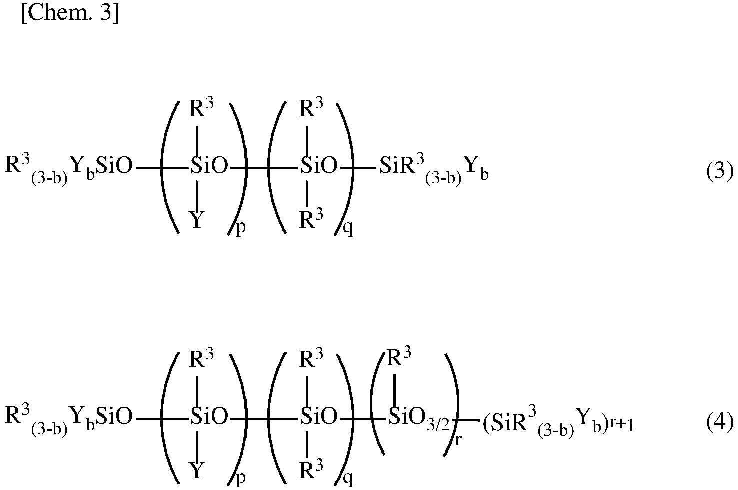 (wherein each R³ is independently a monovalent hydrocarbon group that has no aliphatic unsaturated bonds, each Y is independently an alkenyl group-containing monovalent organic group, "b" is an integer from 0 to 3, "p" is a number of 0 or more, "q" is a number of 3 or more and "r" is a number of 0 or more, with the provisos that "b" and "p" are not at the same time 0 and the sums p+q and p+q+r are each numbers such that the diorganopolysiloxanes of formulas (3) and (4) have viscosities at 25°C which are at least 500 mPa·s but less than 10,000 mPa·s)

In these formulas, R³ is a monovalent hydrocarbon group of preferably 1 to 10 carbon atoms, and more preferably 1 to 6 carbon atoms. Examples include alkyl groups such as methyl, ethyl, propyl and butyl groups; cycloalkyl groups such as the cyclohexyl group; and aryl groups such as phenyl and tolyl groups. An alkyl group such as the methyl group or a phenyl group is preferred.

The alkenyl group-containing monovalent organic groups represented by Y have preferably 2 to 10 carbon atoms, and more preferably 2 to 6 carbon atoms. Examples include alkenyl groups such as vinyl, allyl, hexenyl and octenyl groups; (meth)acryloylalkyl groups such as acryloylpropyl, acryloylmethyl and methacryloylpropyl groups; (meth)acryloxyalkyl groups such as acryloxypropyl, acryloxymethyl, methacryloxypropyl and methacryloxymethyl groups; and alkenyl group-containing monovalent hydrocarbon groups such as cyclohexenylethyl and vinyloxypropyl groups. Industrially, vinyl groups are especially preferred.

Also, "b" is an integer from 0 to 3, and is preferably 1, "p" is a number of 0 or more, "q" is a number of 3 or more, and "r" is a number of 0 or more, preferably a number of 1 or more. Also, "b" and "p" are not at the same time 0, and the sums p+q and p+q+r are each numbers such that the diorganopolysiloxanes of formulas (3) and (4) have viscosities at 25°C which are at least 500 mPa·s but less than 10,000 mPa·s.

Component (C) has a viscosity at 25°C that is at least 500 mPa·s but less than 10,000 mPa·s, and preferably from 1,000 to 6,000 mPa·s. By setting the viscosity in this range, a good handleability, adhesive strength and adherence can be obtained.

The alkenyl content of this low-viscosity alkenyl group-containing diorganopolysiloxane is from 0.00003 to 0.00015 mol/g (component (C)), and preferably from 0.00003 to 0.00010 mol/g. At an alkenyl group content below 0.00003 mol/g, improvement in the adherence of the pressure-sensitive adhesive composition is inadequate; at more than 0.00015 mol/g, the flexibility of the cured composition decreases, as a result of which the adhesive strength and adherence are inadequate.

The alkenyl groups on this alkenyl group-containing diorganopolysiloxane may be located at the ends of the molecular chain or only at the interior of the molecular chain, although it is preferable for the ends of the molecular chain to be capped with alkenyl groups. This is because alkenyl groups at the ends of the molecular chain have a good reactivity, enabling the reaction to be brought to completion in a short time.

The amount of component (C) included per 100 parts by weight of components (A) and (B) combined is from 0 to 200 parts by weight, preferably from 1 to 200 parts by weight, and more preferably from 1 to 100 parts by weight. At more than 200 parts by weight, the adhesive strength decreases. Component (C) is included in such a way that the combined amount of component (C) and subsequently described component (D) per 100 parts by weight of components (A) and (B) combined is from 5 to 200 parts by weight, and preferably from 20 to 100 parts by weight.

Component (C) may be of one type used alone, or two or more types may be used together.

Component (C) may be added together with components (A), (B), (D), (E) and, optionally, (F) during preparation of the silicone pressure-sensitive adhesive composition, or may be added together with component (D) and the crosslinking agent component (E) to an existing addition reaction-curable silicone pressure-sensitive adhesive composition that is commercially available.

### Component (D)

Component (D) is:
(D-1) a resinous copolymer which contains R⁴₃SiO_{1/2} units (wherein R⁴ represents like or unlike, substituted or unsubstituted monovalent hydrocarbon groups of 1 to 10 carbon atoms which have no aliphatic unsaturated bonds, at least one of all occurrences of R⁴ being an alkenyl group) and SiO_{4/2} groups in a molar ratio, expressed as R⁴₃SiO_{1/2} units/SiO_{4/2} units, of from 0.6 to 1.7, and wherein the total amount of alkenyl groups is at least 0.00001 mol/g,
   and/or
(D-2) a resinous copolymer which contains R¹₃SiO_{1/2} units (wherein R¹ is as defined above), R¹R⁵SiO_{2/2} units (wherein R¹ is as defined above and R⁵ is an alkenyl group) and SiO_{4/2} groups in a molar ratio, expressed as R¹₃SiO_{1/2} units/SiO_{4/2} units, of from 0.6 to 1.7, and wherein the total amount of alkenyl groups is at least 0.00001 mol/g.

In component (D-1), R⁴ is a like or unlike, substituted or unsubstituted monovalent hydrocarbon group of 1 to 10 carbon atoms which has no aliphatic unsaturated bonds or is an alkenyl group. The monovalent hydrocarbon group is exemplified by the same groups as mentioned above for R¹. The alkenyl group is one having preferably from 2 to 10 carbon atoms, and more preferably from 2 to 6 carbon atoms. Examples include vinyl, allyl, hexenyl and octenyl groups, with a vinyl group being preferred.

The molar ratio between the R⁴₃ SiO_{1/2} units and the SiO_{4/2} units (R⁴₃SiO_{1/2} units/SiO_{4/2} units) in component (D-1) is from 0.6 to 1.7, and preferably from 0.6 to 1.2. When this molar ratio is too low, the pressure-sensitive adhesive layer becomes too hard and the adhesive strength and adherence to the backing are poor. When the molar ratio is too large, the flowability of the pressure-sensitive adhesive composition increases and a solid state is not achieved after curing.

From the standpoint of productivity, it is preferable for component (D-1) to have a polystyrene-equivalent weight-average molecular weight, as determined by gel permeation chromatography, of from 1,000 to 10,000, and especially from 2,000 to 8,000.

The total amount of alkenyl groups included in component (D-1) is at least 0.00001 mol/g, and preferably at least 0.0005 mol/g. When the total amount of alkenyl groups is too high, the curability becomes inadequate and the adherence to the backing becomes poor. There is no particular upper limit, although from the standpoint of obtaining an adhesive strength, the total amount of alkenyl groups is preferably not more than 0.002 mol/g, and more preferably not more than 0.001 mol/g.

Specific examples of component (D-1) include resinous copolymers consisting of Me₃SiO_{1/2} units, Me₂ViSiO_{1/2} units and SiO_{4/2} units. In the formula, "Me" stands for a methyl group and "Vi" stands for a vinyl group (the same applies below).

In component (D-2), the alkenyl group represented by R⁵ has preferably from 2 to 10 carbon atoms, and more preferably from 2 to 6 carbons. Examples include vinyl, allyl, hexenyl and octenyl groups, with a vinyl group being preferred.

The molar ratio between the R¹₃SiO_{1/2} units and the SiO_{4/2} units (R¹₃SiO_{1/2} units/SiO_{4/2} units) in component (D-2) is from 0.6 to 1.7, and preferably from 0.6 to 1.2. When this molar ratio is too small, the pressure-sensitive adhesive layer becomes too hard and the adhesive strength and adherence to the backing are poor; when the molar ratio is too large, the flowability of the pressure-sensitive adhesive composition increases and a solid state is not achieved after curing.

From the standpoint of productivity (preventing the notable generation of insoluble constituents during production and keeping the productivity from becoming poor), it is preferable for component (D-2) to have a polystyrene-equivalent weight-average molecular weight, as determined by gel permeation chromatography, of from 1,000 to 10,000, and especially from 2,000 to 8,000.

The total amount of alkenyl groups included in component (D-2) is at least 0.00001 mol/g, and preferably at least 0.0005 mol/g. When the total amount of alkenyl groups is too low, the curability becomes inadequate and adherence to the backing becomes poor. There is no particular upper limit, although from the standpoint of obtaining an adhesive strength, the total amount of alkenyl groups is preferably not more than 0.002 mol/g, and more preferably not more than 0.001 mol/g.

Specific examples of component (D-2) include resinous copolymers consisting of Me₃SiO_{1/2} units, Me₂ViSiO_{2/2} units and SiO_{4/2} units.

The amount of component (D-1) included per 100 parts by weight of components (A) and (B) combined is from 5 to 200 parts by weight, and preferably from 10 to 100 parts by weight.

The amount of component (D-2) included per 100 parts by weight of components (A) and (B) combined is from 5 to 100 parts by weight, and preferably from 10 to 100 parts by weight.

When component (D-1) and component (D-2) are used together, the combined amount of components (D-1) and (D-2) per 100 parts by weight of components (A) and (B) combined should be from 5 to 200 parts by weight.

When too much component (D) is included, the pressure-sensitive adhesive coat becomes too hard and the adhesion is poor. When too little component (D) is included, a sufficient adherence to the backing is not obtained and the pressure-sensitive adhesive falls off the substrate.

When components (C) and (D) are used together, they are included in a combined amount of from 5 to 200 parts by weight, preferably from 10 to 100 parts by weight, per 100 parts by weight of components (A) and (B) combined. When the combined amount of components (C) and (D) is too low, this is disadvantageous from the standpoint of adherence to the backing; when it is too high, the adhesive strength markedly declines.

The ratio in which components (C) and (D) are included at this time, expressed as the weight ratio (C)/(D), is preferably from 0/100 to 95/5, more preferably from 0/100 to 80/20, and even more preferably from 5/95 to 60/40.

### Component (E)

Component (E) is an organohydrogenpolysiloxane containing at least two SiH groups per molecule.

Component (E), which serves as a crosslinking agent, is an organohydrogenpolysiloxane having at least 2, preferably at least 3 and up to 100, silicon-bonded hydrogen atoms (SiH groups) per molecule. One that is linear, branched or cyclic may be used.

Component (E) is exemplified by, but not limited to, compounds of formulas (5) and (6) below. 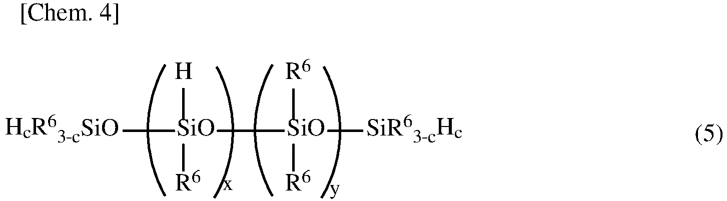 (wherein each R⁶ is independently a monovalent hydrocarbon group of 1 to 10 carbon atoms, "c" is 0 or 1, "x" is an integer of 1 or more, "y" is an integer of 0 or more, c+x ≥ 2, and x+y is a number such that the organohydrogenpolysiloxane of formula (5) has a viscosity at 25°C which is from 1 to 5,000 mPa·s)

In formula (5), R⁶ is a monovalent hydrocarbon group of 1 to 10 carbon atoms, preferably 1 to 6 carbon atoms. Examples include alkyl groups such as methyl, ethyl, propyl and butyl groups; cycloalkyl groups such as the cyclohexyl group; and aryl groups such as phenyl and tolyl groups. A methyl group is especially preferred.

Here, "c" is 0 or 1, "x" is an integer of 1 or more, preferably an integer from 1 to 100, and "y" is an integer of 0 or more, preferably an integer from 0 to 400, with the proviso that c+x ≥ 2, especially that 100 ≥ c+x ≥ 3. Also, "x" and "y" are preferably integers such that x+y ≥ 4, and more preferably 200 ≥ x+y ≥ 8, and the sum x+y is a number such that the organohydrogenpolysiloxane of formula (5) has a viscosity at 25°C which is from 1 to 5,000 mPa·s. 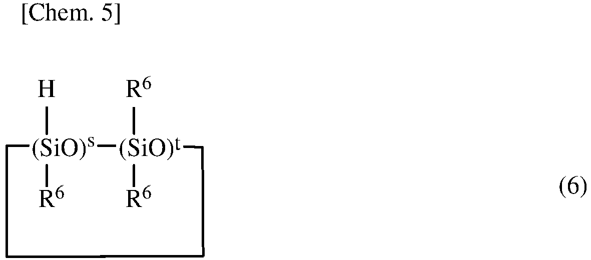 (wherein R⁶ is as defined above, "s" is an integer of 2 or more, "t" is an integer of 0 or more, and s+t ≥ 3)

In formula (6), "s" is an integer of 2 or more, and preferably an integer from 2 to 8; "t" is an integer of 0 or more, and preferably an integer from 0 to 6; and "s" and "t" are integers such that s+t ≥ 3, and preferably 8 ≥ s+t ≥ 3.

The organohydrogenpolysiloxane of component (E) has a viscosity at 25°C which is preferably from 1 to 5,000 mPa·s, and more preferably from 5 to 500 mPa·s.

This organohydrogenpolysiloxane may be of one type used alone, or two or more types may be used together.

Component (E) is preferably included in an amount such that the molar ratio of SiH groups in component (E) to the sum of the amount of alkenyl groups in component (A), the amount of alkenyl groups in component (C) and the amount of alkenyl groups in component (D), expressed as SiH groups/alkenyl groups, is in the range of 0.5 to 5, and especially 1.0 to 2.0. Components (C), (D) and (E) may be used by addition as a mixture thereof to an addition reaction-curable silicone pressure-sensitive adhesive composition that is commercially available. In this case, component (E) is preferably included in an amount such that the molar ratio of SiH groups in component (E) to the sum of the amount of alkenyl groups in component (C) and the amount of alkenyl groups in component (D) is in the range of 0.5 to 5, especially 1 to 2. When this molar ratio between the SiH groups and the alkenyl groups is less than 0.5, the crosslink density becomes low, along with which the pressure-sensitive adhesive layer does not cure; when this molar ratio is more than 5, the crosslink density becomes too high and a sufficient adhesive strength and tack are not obtained. Also, when this molar ratio exceeds 5, the pot life of the treatment solution becomes shorter.

### Component (F)

Component (F), which is a reaction regulator, is an ingredient that is optionally added where necessary to keep the composition from thickening or gelling prior to heat-curing when the silicone pressure-sensitive adhesive composition is prepared and coated onto a backing.

Specific examples include 3-methyl-1-butyn-3-ol, 3-methyl-1-pentyn-3-ol, 3,5-dimethyl-1-hexyn-3-ol, 1-ethynylcyclohexanol, 3-methyl-3-trimethylsiloxy-1-butyne, 3-methyl-3-trimethylsiloxy-1-pentyne, 3,5-dimethyl-3-trimethylsiloxy-1-hexyne, 1-ethynyl-1-trimethylsiloxycyclohexane, bis(2,2-dimethyl-3-butynoxy)dimethylsilane, 1,3,5,7-tetramethyl-1,3,5,7-tetravinylcyclotetrasiloxane and 1,1,3,3-tetramethyl-1,3-divinyldisiloxane. 1-Ethynylcyclohexanol and 3-methyl-1-butyn-3-ol are preferred.

When component (F) is used, the amount included is generally in the range of 0 to 8 parts by weight, preferably 0.01 to 8 parts by weight, and especially 0.05 to 2 parts by weight, per 100 parts by weight of the sum of components (A), (B), (C), (D) and (E). At more than 8 parts by weight, the curability of the silicone pressure-sensitive adhesive composition may decrease. At an amount of 0.01 part by weight or more, reaction-regulating effects are sufficiently manifested.

### Component G

Component (G) is a platinum catalyst (i.e. a platinum group metal catalyst) which may be an uncombined platinum group metal or a platinum group metal compound. One that has hitherto been known as a catalyst for addition reaction-curable silicone rubber compositions may be used. Examples include platinum catalysts such as chloroplatinic acid, alcohol solutions of chloroplatinic acid, reaction products of chloroplatinic acid and alcohols, reaction products of chloroplatinic acid and olefin compounds, and reaction products of chloroplatinic acid and vinyl group-containing siloxanes, as well as palladium catalysts and rhodium catalysts.

Component (G) is added in an effective amount. The platinum group metal content (weight basis) with respect to the combined weight of components (A), (B), (C), (D) and (E) is generally from 1 to 5,000 ppm, and preferably from 5 to 2,000 ppm. At less than 1 ppm, the curability of the silicone pressure-sensitive adhesive composition may decrease, the crosslink density may become low and the holding power may decrease; at more than 5,000 ppm, the pot life of the treatment bath may become shorter.

### Optional Ingredients

Optional ingredients other than the above ingredients may also be added to the silicone pressure-sensitive adhesive composition of the invention. Examples include non-reactive organopolysiloxanes such as dimethylpolysiloxanes other than components (A) and (C) and dimethyldiphenylpolysiloxanes; phenolic, quinone-based, amine-based, phosphorus-based, phosphite-based, sulfur-based and thioether-based antioxidants; triazole-based and benzophenone-based light stabilizers; phosphate ester-based, halogen-based, phosphorus-based and antimony-based flame retardants; antistatic agents such as cationic activators, anionic activators and nonionic activators; and, as solvents for lowering the viscosity during coating, aromatic solvents such as toluene and xylene, aliphatic solvents such as hexane, octane and iso-paraffin, ketone solvents such as methyl ethyl ketone and methyl isobutyl ketone, ester solvents such as ethyl acetate and isobutyl acetate, ether solvents such as diisopropyl ether and 1,4-dioxane, and mixed solvents of these.

### Method of Producing the Composition

The pressure-sensitive adhesive composition of the invention can be prepared by mixing together and dissolving the above ingredients. From the standpoint of the pot life of the composition, it is desirable for the method of preparation to be one that dissolves component (A) or components (A) and (B) in, where necessary, a solvent, subsequently adds and mixes together components (D) and (E) or components (C) to (E) and, optionally, component (F), and adds component (G) just prior to use; or one which mixes together components (A) to (F), and adds component (G) just prior to use.

### Applications of the Composition

A pressure-sensitive adhesive layer can be obtained by coating the inventive silicone pressures-sensitive adhesive composition produced as described above onto various types of backings and curing the composition under given conditions. The silicone pressure-sensitive adhesive composition of the invention can be suitably used in a pressure-sensitive tape or pressure-sensitive film composed of, for example, a backing and, laminated onto at least one side of the backing, a cured layer made up of the cured form of the inventive composition.

### Backing

The backing is exemplified by plastic films such as polyester, polytetrafluoroethylene, polyimide, polyphenylene sulfide, polyamide, polycarbonate, polystyrene, polypropylene, polyethylene and polyvinyl chloride films; metal foils such as aluminum foil and copper foil; papers such as Japanese paper, synthetic paper and polyethylene laminated paper; fabrics; glass fibers; and composite backings obtained by laminating a plurality of these.

### Coating Method

The coating method should be one that uses a known coating means to carry out coating. Examples include a comma coater, lip coater, roll coater, die coater, knife coater, blade coater, rod coater, kiss coater and gravure coater, and also screen coating, dip coating and cast coating.

The coating amount, although not particularly limited, is preferably an amount such that the thickness of the pressure-sensitive adhesive layer after curing is from 2 to 1,000 µm, and especially from 2 to 500 µm.

The curing conditions are typically from 30 seconds to 3 minutes at between 80°C and 150°C, but are not limited to these.

A pressure-sensitive tape or pressure-sensitive film may be produced by directly coating the silicone pressure-sensitive adhesive composition of the invention onto the backing as described above. Alternatively, pressure-sensitive tape may be produced by a transfer method in which first the composition is coated onto a release film or release paper that has been release-coated and the composition is cured, after which the cured composition is laminated onto the backing. A method that directly coats the silicone pressure-sensitive adhesive composition of the invention onto the backing is preferred. By carrying out direct coating, adherence to the backing is further improved.

Adherends for the pressure-sensitive tape or pressure-sensitive film produced using the silicone pressure-sensitive adhesive composition of the invention are not particularly limited. Examples include metals such as stainless steel, copper and iron; any of these metals whose surface has been plated or rust-proofed; ceramics such as glass, glass that has been chemically strengthened or stain-proofed, and porcelain; resins such as polytetrafluoroethylene, polyimide, epoxy resin, novolak resin and polarizers; and also composites in which a plurality of these are used in combination.

### EXAMPLES

Examples and Comparative Examples are given below to more concretely illustrate the invention, although the invention is not limited by these Examples. In the Examples, the contents of ingredients are indicated in parts or percent (%), both of which are by weight. Property values are measured values obtained by the test methods described below. Also, in the formulas shown below, "Me" stands for a methyl group and "Vi" stands for a vinyl group. The formulations in the respective Examples and Comparative Examples are shown in Tables 1 to 3.

### (1) Adhesive Strength

A pressure-sensitive tape was produced by using an applicator to coat a solution of addition reaction-curable silicone pressure-sensitive adhesive composition onto a polyethylene terephthalate film having a thickness of 23 µm, a width of 25 mm and a length of 200 mm to a pressure-sensitive adhesive layer thickness after curing of 30 µm, following which the composition was cured by heating at 130°C for 2 minutes.

In accordance with JIS Z2037, this pressure-sensitive tape was attached to a stainless steel plate and pressed against the plate by passing a rubber layer-covered 2-kg roller once back and forth over it, and subsequently left to stand at room temperature (25°C) for about 20 hours.

An end of the adhesive tape was then peeled away a little, gripped and, using a tensile testing machine, the average force (N/25 mm) required to peel the pressure-sensitive tape from the stainless steel plate at an angle of 180° was measured.

### (2) Adherence to Backing

As in (1), a pressure-sensitive tape was produced by using an applicator to coat a solution of addition reaction-curable silicone pressure-sensitive adhesive composition onto a polyethylene terephthalate film having a thickness of 23 µm, a width of 25 mm and a length of 200 mm to a pressure-sensitive adhesive layer thickness after curing of 30 µm, following which the composition was cured by heating at 130°C for 2 minutes.

The adherence of the resulting pressure-sensitive tape to a backing under each of the following conditions was evaluated by the method described below: (i) immediately following production of the pressure-sensitive tape, (ii) after about 20 hours have elapsed at room temperature (25°C), and (iii) after being laminated onto a 50 µm thick polyethylene terephthalate film and stored for 20 hours, or (iv) 96 hours, under constant temperature and humidity (85°C, 85% relative humidity).

In the adherence evaluations, when the adhesive strength measured in (1) exceeded 1 N/25 mm, peeling of the pressure-sensitive adhesive layer by Evaluation Method 1 below and elongation by Evaluation Method 2 were evaluated.

When the adhesive strength measured in (1) was 1 N/25 mm or less, the presence or absence of fall-off of the pressure-sensitive adhesive layer was evaluated by Evaluation Method 3 below.

### • Evaluation Method 1

To evaluate separation (lifting) of the pressure-sensitive adhesive layer from the backing in a pressure-sensitive tape, a 2 mm slit was inserted at the center on one widthwise edge of the film backing having a 25-mm width, following which both lengthwise ends of the pressure-sensitive tape were gripped at a grip interval of 100 mm and the tape was pulled in the lengthwise direction at a pulling velocity of 100 mm/min, resulting in stretching of the pressure-sensitive adhesive layer and tearing of the film backing at the slit. In this state, the tape was additionally pulled lengthwise and was then checked to determine whether the pressure-sensitive adhesive layer lifts from the film backing (a condition referred to below as "peeling").

The results are shown in Tables 4 to 6. Pressure-sensitive tapes in which the pressure-sensitive adhesive layer lifted up over the entire surface were rated as "X," those in which a portion lifted up were rated as "Δ," and those in which lifting was not observed were rated as "O"

### • Evaluation Method 2

The adhesive breakability (elongation) was measured by inserting a slit only in the backing film in the same way as described above, gripping both lengthwise ends of the pressure-sensitive tape (in the laminated state) and stretching the tape lengthwise, and measuring the amount of elongation by the pressure-sensitive adhesive layer until it breaks at some point [(length of pressure-sensitive adhesive layer at break) - (length of pressure-sensitive adhesive layer before stretching) (mm); referred to below as the "elongation"] .

The results are shown in Tables 4 to 6. If the adhesive breakability is good, elongation by the pressure-sensitive adhesive layer is short.

### • Evaluation Method 3

Scratches were placed on the surface of the pressure-sensitive adhesive, the surface was vigorously rubbed with the fingers, and the pressure-sensitive tape was checked to determine whether fall-off of the pressure-sensitive adhesive layer occurred.

The results are shown in Tables 4 to 6. Cases in which there was no loss of the pressure-sensitive adhesive layer were rated as "O" cases in which powdery shedding of the pressure-sensitive adhesive layer occurred were rated as "Δ," and cases in which the pressure-sensitive layer fell off as a film were rated as "X."

### Example 1

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (30 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (116.7 parts), and
toluene (36.7 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (50 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (100 parts),
(E) a crosslinking agent of the following formula

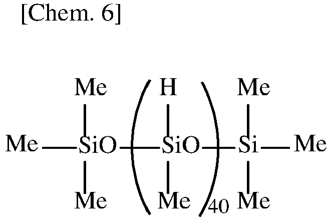

### (3.1 parts; molar ratio of SiH groups to SiVi groups in composition, 1.1), and (F) ethynylcyclohexanol (0.1 part).

A platinum catalyst (available from Shin-Etsu Chemical Co., Ltd. under the trade name CAT-PL-50T) was added to 100 parts of this mixture in an amount corresponding to 50 ppm (platinum weight basis, the same applies below) with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 4.

### Example 2

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (90 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 3,500] (16.7 parts), and
toluene (76.7 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (50 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 4,200] (100 parts),
(E) a crosslinking agent of the following formula

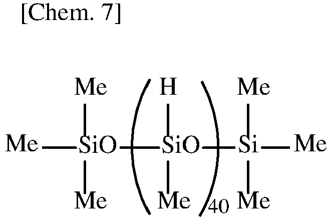

### (3.2 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 4.

### Example 3

A solution composed of
(A-1) a vinyl di-terminated dimethylpolysiloxane which has a viscosity at 25°C of 30,000 mPa·s and a vinyl group content of 0.00004 mol/g and is capped at both ends of the molecular chain with SiMe₂Vi groups (100 parts), and
toluene (63.3 parts)
had the following added to and mixed therewith:
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 6,200] (20 parts),
(E) a crosslinking agent of the following formula

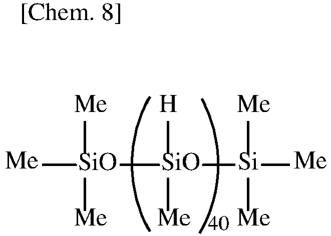

### (1.2 parts; molar ratio of SiH groups to SiVi groups in composition, 1.5), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 4.

### Example 4

A solution composed of
(A-1) a vinyl di-terminated dimethylpolysiloxane which has a viscosity at 25°C of 30,000 mPa·s and a vinyl group content of 0.00004 mol/g and is capped at both ends of the molecular chain with SiMe₂Vi groups (100 parts), and
toluene (70 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (10 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 4,200] (20 parts),
(E) a crosslinking agent of the following formula

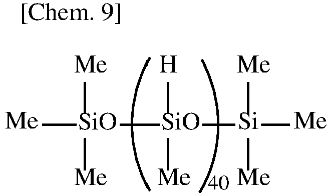

### (1.2 parts; molar ratio of SiH groups to SiVi groups in composition, 1.5), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 4.

### Example 5

The following were added and mixed together:
(A-2) a vinyl di-terminated dimethylpolysiloxane which has a viscosity at 25°C of 27,000 mPa·s when dissolved to a concentration of 30% in toluene, has a vinyl group content of 0.00002 mol/g and is capped at both ends of the molecular chain with SiMe₂Vi groups (50 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 4,500] (83.3 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (50 parts),
(E) a crosslinking agent of the following formula

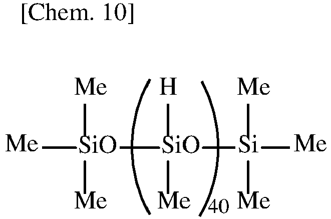

### (1.5 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 4.

### Example 6

The following were added and mixed together:
(A-2) a vinyl di-terminated dimethylpolysiloxane which has a viscosity at 25°C of 27,000 mPa·s when dissolved to a concentration of 30% in toluene, has a vinyl group content of 0.00002 mol/g and is capped at both ends of the molecular chain with SiMe₂Vi groups (50 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (83.3 parts),
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (100 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (10 parts),
(E) a crosslinking agent of the following formula

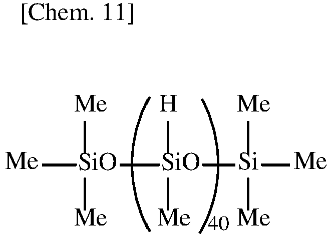

### (1.4 parts; molar ratio of SiH groups to SiVi groups in composition, 2), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 5.

### Example 7

The following were added and mixed together:
(A-1) a vinyl di-terminated dimethylpolysiloxane which has a viscosity at 25°C of 60,000 mPa·s, is capped at both ends of the molecular chain with SiMe₂Vi groups and has a vinyl group content of 0.00003 mol/g (50 parts),
(A-2) a vinyl di-terminated dimethylpolysiloxane which has a viscosity at 25°C of 20,000 mPa·s when dissolved to a concentration of 30% in toluene, has a vinyl group content of 0.00001 mol/g and is capped at both ends of the molecular chain with SiMe₂Vi groups (40 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,400] (100 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (100 parts),
(E) a crosslinking agent of the following formula

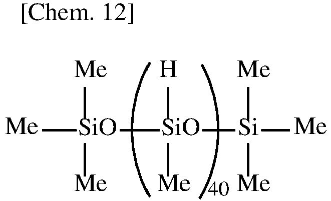

### (3.0 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane coating of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 5.

### Example 8

The following were added and mixed together:
(A-2) a vinyl di-terminated dimethylpolysiloxane which has a viscosity at 25°C of 20,000 mPa·s when dissolved to a concentration of 30% in toluene, has a vinyl group content of 0.00001 mol/g and is capped at both ends of the molecular chain with SiMe₂Vi groups (40 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (100 parts),
(C) A vinyl di-terminated dimethylpolysiloxane which has a viscosity at 25°C of 600 mPa·s, in which both ends of the molecular chain are capped with SiMe₂Vi groups and which has a vinyl group content of 0.00015 mol/g (50 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (100 parts),
(E) a crosslinking agent of the following formula

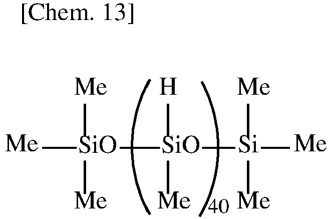

### (3.4 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 5.

### Example 9

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (30 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (116.7 parts), and
toluene (36.7 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (50 parts),
(D-2) a 50% toluene solution of a polysiloxane which consists of Me₃SiO_{1/2} units, Me₂ViSiO_{2/2} units and SiO_{4/2} units and has a vinyl group content of 0.0008 mol/g [Me₃SiO_{1/2} units/SiO_{4/2} units = 0.8 (molar ratio), weight-average molecular weight, 4,000] (100 parts),
(E) a crosslinking agent of the following formula

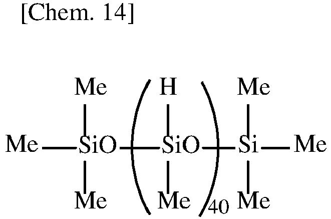

### (3.1 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 5.

### Example 10

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (90 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (16.7 parts), and
toluene (76.7 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (100 parts),
(D-2) a 50% toluene solution of a polysiloxane which consists of Me₃SiO_{1/2} units, Me₂ViSiO_{2/2} units and SiO_{4/2} units and has a vinyl group content of 0.0008 mol/g [Me₃SiO_{1/2} units/SiO_{4/2} units = 0.8 (molar ratio), weight-average molecular weight, 3,900] (100 parts),
(E) a crosslinking agent of the following formula

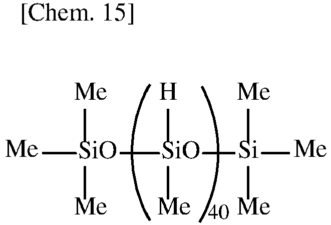

### (3.4 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 5.

### Comparative Example 1

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (30 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (116.7 parts), and
toluene (36.7 parts)
had the following added to and mixed therewith:
(E) a crosslinking agent of the following formula

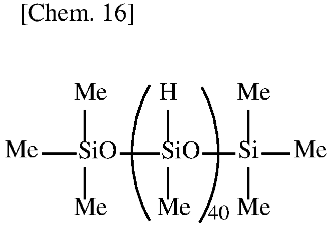

### (0.1 part; molar ratio of SiH groups to SiVi groups in composition, 3), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 6.

### Comparative Example 2

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (90 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (16.7 parts), and
toluene (60 parts)
had the following added to and mixed therewith:
(E) a crosslinking agent of the following formula

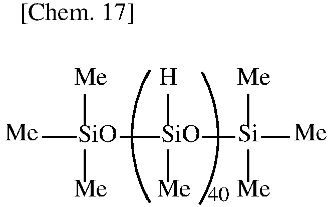

### (0.4 part; molar ratio of SiH groups to SiVi groups in composition, 3), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 6.

### Comparative Example 3

A solution composed of
(A-1) a vinyl di-terminated dimethylpolysiloxane which has a viscosity at 25°C of 30,000 mPa·s and a vinyl group content of 0.00004 mol/g and is capped at both ends of the molecular chain with SiMe₂Vi groups (100 parts), and
toluene (66.7 parts)
had the following added to and mixed therewith:
(E) a crosslinking agent of the following formula

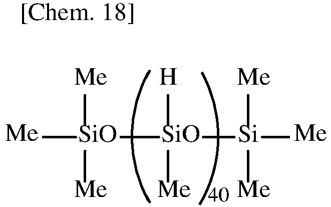

### (0.5 part; molar ratio of SiH groups to SiVi groups in composition, 2), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 6.

### Comparative Example 4

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (30 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (116.7 parts), and
toluene (36.7 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (100 parts),
(D-1) a 50% toluene solution of a polysiloxane which consists of Me₃SiO_{1/2} units, Me₂ViSiO_{1/2} units and SiO_{4/2} units and has a vinyl group content of 0.0008 mol/g [(Me₃SiO_{1/2} units + Me₂ViSiO_{1/2} units)/SiO_{4/2} units = 0.8 (molar ratio), weight-average molecular weight, 3,900] (300 parts),
(E) a crosslinking agent of the following formula

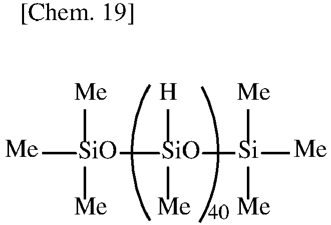

### (8.9 parts; molar ratio of SiH groups to SiVi groups in composition, 1.1), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 6.

### Comparative Example 5

A solution composed of
(A-2) a vinyl di-terminated dimethylpolysiloxane which has a viscosity at 25°C of 27,000 mPa·s when dissolved to a concentration of 30% in toluene, has a vinyl group content of 0.00002 mol/g, contains methylvinylsiloxane units and is capped at both ends of the molecular chain with SiMe₂Vi groups (40 parts),
(B) a 60% toluene solution of a polysiloxane consisting of Me₃SiO_{1/2} units and SiO_{4/2} units [Me₃SiO_{1/2} units/SiO_{4/2} units = 0.8 (molar ratio); weight-average molecular weight, 5,600] (100 parts), and
toluene (160 parts)
had the following added to and mixed therewith:
(C) A vinyl di-terminated dimethylpolysiloxane which has a viscosity at 25°C of 5,000 mPa·s, in which both ends of the molecular chain are capped with SiMe₂Vi groups and which has a vinyl group content of 0.00006 mol/g (200 parts),
(E) a crosslinking agent of the following formula

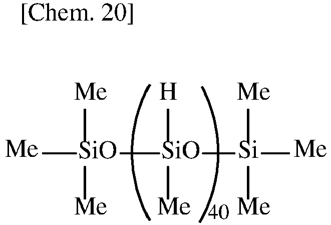

### (2.5 parts; molar ratio of SiH groups to SiVi groups in composition, 3), and (F) ethynylcyclohexanol (0.1 part).

The same platinum catalyst as in Example 1 was added to 100 parts of this mixture in an amount corresponding to 50 ppm with respect to the sum of the siloxane ingredients in the mixture and further mixing was carried out, thereby preparing a silicone pressure-sensitive adhesive composition solution having a siloxane content of about 60%.

This silicone pressure-sensitive adhesive composition solution was coated onto a polyethylene terephthalate film, and 2 minutes of curing at 130°C was carried out.

The adhesive strength and the adherence to the backing in the resulting pressure-sensitive tape were measured. The results are shown in Table 6.

**Table 1**

| Component | | | Example | | | | |
|---|---|---|---|---|---|---|---|
| | | | 1 | 2 | 3 | 4 | 5 |
| Component (A) | A-1 | Viscosity (mPa·s) | | | 30,000 | 30,000 | |
| | | Vinyl content (mol/g) | | | 0.00004 | 0.00004 | |
| | | Amount of siloxane included (parts) | | | 100 | 100 | |
| | A-2 | Viscosity of 30% toluene solution (mPa·s) | 27,000 | 27,000 | - | - | 27,000 |
| | | Vinyl content (mol/g) | 0.00002 | 0.00002 | | | 0.00002 |
| | | Amount of siloxane included (parts) | 30 | 90 | | | 50 |
| Component (B) | | Amount of siloxane included (parts) | 70 | 10 | 0 | 0 | 50 |
| Component (C) | | Viscosity (mPa·s) | 5,000 | 5,000 | - | 5,000 | - |
| | | Vinyl content (mol/g) | 0.00006 | 0.00006 | - | 0.00006 | - |
| | | Amount of siloxane included (parts) | 50 | 50 | 0 | 10 | 0 |
| Component (D) | | Vinyl content (mol/g) | 0.0008 | 0.0008 | 0.0008 | 0.0008 | 0.0008 |
| | | Amount of siloxane included (parts) | 50 | 50 | 10 | 10 | 25 |
| Component (E) | | H/Vi | 1.1 | 1.1 | 1.5 | 1.5 | 1.1 |
| | | Amount of H-siloxane included (parts) | 3.1 | 3.2 | 1.2 | 1.2 | 1.5 |
| Component (G) | | Pt catalyst (Pt weight basis, ppm) | 50 | 50 | 50 | 50 | 50 |

**Table 2**

| Component | | | Example | | | | |
|---|---|---|---|---|---|---|---|
| | | | 6 | 7 | 8 | 9 | 10 |
| Component (A) | A-1 | Viscosity (mPa·s) | | 60,000 | | | |
| | | Vinyl content (mol/g) | | 0.00003 | | | |
| | | Amount of siloxane included (parts) | | 50 | | | |
| | A-2 | Viscosity of 30% toluene solution (mPa·s) | 27,000 | 20,000 | 20,000 | 27,000 | 27,000 |
| | | Vinyl content (mol/g) | 0.00002 | 0.00001 | 0.00001 | 0.00002 | 0.00002 |
| | | Amount of siloxane included (parts) | 50 | 40 | 40 | 30 | 90 |
| Component (B) | | Amount of siloxane included (parts) | 50 | 60 | 60 | 70 | 10 |
| Component (C) | | Viscosity (mPa·s) | 5,000 | - | 600 | 5,000 | 5,000 |
| | | Vinyl content (mol/g) | 0.00006 | - | 0.00015 | 0.00006 | 0.00006 |
| | | Amount of siloxane included (parts) | 100 | - | 50 | 50 | 100 |
| Component (D) | | Vinyl content (mol/g) | 0.0008 | 0.0008 | 0.0008 | 0.0008 | 0.0008 |
| | | Amount of siloxane included (parts) | 5 | 50 | 50 | 50 (D-2) | 50 (D-2) |
| Component (E) | | H/Vi | 2 | 1.1 | 1.1 | 1.1 | 1.1 |
| | | Amount of H-siloxane included (parts) | 1.4 | 3.0 | 3.4 | 3.1 | 3.4 |
| Component (G) | | Pt catalyst (Pt weight basis, ppm) | 50 | 50 | 50 | 50 | 50 |

**Table 3**

| Component | | | Comparative Example | | | | |
|---|---|---|---|---|---|---|---|
| | | | 1 | 2 | 3 | 4 | 5 |
| Component (A) | A-1 | Viscosity (mPa·s) | - | - | 30,000 | - | - |
| | | Vinyl content (mol/g) | | | 0.00004 | | |
| | | Amount of siloxane included (parts) | | | 100 | | |
| | A-2 | Viscosity of 30% toluene solution (mPa·s) | 27,000 | 27,000 | | 27,000 | 27,000 |
| | | Vinyl content (mol/g) | 0.00002 | 0.00002 | | 0.00002 | 0.00002 |
| | | Amount of siloxane included (parts) | 30 | 90 | | 30 | 40 |
| Component (B) | | Amount of siloxane included (parts) | 70 | 10 | 0 | 70 | 60 |
| Component (C) | | Viscosity (mPa·s) | - | - | - | 5,000 | 5,000 |
| | | Vinyl content (mol/g) | - | - | - | 0.00006 | 0.00006 |
| | | Amount of siloxane included (parts) | 0 | 0 | 0 | 100 | 200 |
| Component (D) | | Vinyl content (mol/g) | - | - | - | 0.0008 | - |
| | | Amount of siloxane included (parts) | 0 | 0 | 0 | 150 | 0 |
| Component (E) | | H/Vi | 3 | 3 | 2 | 1.1 | 3 |
| | | Amount of H-siloxane included (parts) | 0.1 | 0.4 | 0.5 | 8.9 | 2.5 |
| Component (G) | | Pt catalyst (Pt weight basis, ppm) | 50 | 50 | 50 | 50 | 50 |

**Table 4**

| | | Example | | | | |
|---|---|---|---|---|---|---|
| | | 1 | 2 | 3 | 4 | 5 |
| Adhesive power (N/25 mm) | | 7.5 | 0.02 | 0.03 | 0.01 | 3.5 |
| Peeling | Immediately after coating | _{○} | ○ | ○ | ○ | ○ |
| | Room temperature/20 hrs | ○ | ○ | ○ | ○ | ○ |
| | 85°C/85% RH/20 hrs | ○ | ○ | ○ | ○ | ○ |
| | 85°C/85% RH/96 hrs | ○ | ○ | ○ | ○ | ○ |
| Elongation (mm) | Immediately after coating | 0 | - | - | - | 0 |
| | Room temperature/20 hrs | 0 | - | - | - | 0 |
| | 85°C/85% RH/20 hrs | 0 | - | - | - | 0 |
| | 85°C/85% RH/96 hrs | 0 | - | - | - | 5 |
| Fall-off | Immediately after coating | - | ○ | ○ | ○ | - |
| | Room temperature/20 hrs | - | ○ | ○ | ○ | - |
| | 85°C/85% RH/20 hrs | - | ○ | ○ | ○ | - |
| | 85°C/85% RH/96 hrs | - | ○ | ○ | ○ | - |

**Table 5**

| | | Example | | | | |
|---|---|---|---|---|---|---|
| | | 6 | 7 | 8 | 9 | 10 |
| Adhesive power (N/25 mm) | | 3.5 | 8.2 | 8.0 | 8.0 | 7.5 |
| Peeling | Immediately after coating | ○ | ○ | ○ | ○ | ○ |
| | Room temperature/20 hrs | ○ | ○ | ○ | ○ | ○ |
| | 85°C/85% RH/20 hrs | ○ | ○ | ○ | ○ | ○ |
| | 85°C/85% RH/96 hrs | Δ | ○ | ○ | ○ | ○ |
| Elongation (mm) | Immediately after coating | 0 | 0 | 0 | 0 | 0 |
| | Room temperature/20 hrs | 0 | 0 | 0 | 0 | 0 |
| | 85°C/85% RH/20 hrs | 0 | 0 | 0 | 0 | 0 |
| | 85°C/85% RH/96 hrs | 7 | 0 | 0 | 0 | 0 |
| Fall-off | Immediately after coating | - | - | - | - | - |
| | Room temperature/20 hrs | - | - | - | - | - |
| | 85°C/85% RH/20 hrs | - | - | - | - | - |
| | 85°C/85% RH/96 hrs | - | - | - | - | - |

**Table 6**

| | | Comparative Example | | | | |
|---|---|---|---|---|---|---|
| | | 1 | 2 | 3 | 4 | 5 |
| Adhesive power (N/25 mm) | | 12.5 | 0.04 | 0.01 | did not stick | 5.0 |
| Peeling | Immediately after coating | × | × | × | - | ○ |
| | Room temperature/20 hrs | × | × | × | - | ○ |
| | 85°C/85% RH/20 hrs | × | × | × | - | Δ |
| | 85°C/85% RH/96 hrs | × | × | × | - | × |
| Elongation (mm) | Immediately after coating | 130 | - | - | - | 5 |
| | Room temperature/20 hrs | 130 | - | - | - | 5 |
| | 85°C/85% RH/20 hrs | 130 | - | - | - | 30 |
| | 85°C/85% RH/96 hrs | 130 | - | - | - | 100 |
| Fall-off | Immediately after coating | - | × | × | - | - |
| | Room temperature/20 hrs | - | × | × | - | - |
| | 85°C/85% RH/20 hrs | - | × | × | - | - |
| | 85°C/85% RH/96 hrs | - | × | × | - | - |

As shown in Tables 4 and 5, the silicone pressure-sensitive adhesive compositions of the invention had a good adherence to backing films.

## Claims

1. An addition reaction-curable silicone pressure-sensitive adhesive composition comprising:
(A) from 20 to 100 parts by weight of
(A-1) linear diorganopolysiloxane containing at least two alkenyl groups per molecule and having a viscosity at 25°C of at least 10,000 mPa·s, or
(A-2) linear diorganopolysiloxane containing at least two alkenyl groups per molecule and having a viscosity at 25°C when diluted to 30 wt% with toluene of not more than 100,000 mPa·s;
(B) from 80 to 0 parts by weight of organopolysiloxane resin containing R¹₃SiO_{1/2} units (wherein R¹ represent like or unlike, substituted or unsubstituted monovalent hydrocarbon groups of 1 to 10 carbon atoms which have no aliphatic unsaturated bonds) and SiO_{4/2} units in a molar ratio, expressed as R¹₃SiO_{1/2} units/SiO_{4/2} units, of from 0.6 to 1.7 (provided that the sum of components (A) and (B) is 100 parts by weight);
(C) from 0 to 200 parts by weight of diorganopolysiloxane having at least two alkenyl groups per molecule, an alkenyl group content of from 0.00003 to 0.00015 mol/g, and a viscosity at 25°C of at least 500 mPa·s but less than 10,000 mPa·s;
(D)
(D-1) from 5 to 200 parts by weight of resinous copolymer which contains R⁴₃SiO_{1/2} units (wherein R⁴ represent like or unlike, substituted or unsubstituted monovalent hydrocarbon groups of 1 to 10 carbon atoms which have no aliphatic unsaturated bonds, at least one of all occurrences of R⁴ being an alkenyl group) and SiO_{4/2} groups in a molar ratio, expressed as R⁴₃SiO_{1/2} units/SiO_{4/2} units, of from 0.6 to 1.7, and wherein the total amount of alkenyl groups is at least 0.00001 mol/g, and/or
(D-2) from 5 to 100 parts by weight of resinous copolymer which contains R¹₃SiO_{1/2} units (wherein R¹ is as defined above), R¹R⁵SiO_{2/2} units (wherein R¹ is as defined above and R⁵ is an alkenyl group) and SiO_{4/2} groups in a molar ratio, expressed as R¹₃SiO_{1/2} units/SiO_{4/2} units, of from 0.6 to 1.7, and wherein the total amount of alkenyl groups is at least 0.00001 mol/g
(provided that the total amount of components (C) and (D) per 100 parts by weight of the total amount of components (A) and (B) is from 5 to 200 parts by weight);
(E) organohydrogenpolysiloxane containing at least two SiH groups per molecule, in an amount such that the molar ratio of SiH groups in component (E) relative to the combined amount of alkenyl groups in component (A), alkenyl groups in component (C) and alkenyl groups in component (D) is from 0.5 to 5; and
(G) an effective amount of platinum catalyst (platinum group metal catalyst).

2. A silicone pressure-sensitive adhesive composition of claim 1, further comprising (F) from 0 to 8 parts by weight of reaction regulator per 100 parts by weight of the sum of components (A), (B), (C), (D) and (E).

3. A silicone pressure-sensitive adhesive composition of claim 1 or 2, wherein both ends of the diorganopolysiloxane of component (C) are capped with alkenyl groups.

4. A silicone pressure-sensitive adhesive composition of any one of claims 1 to 3, wherein the content of component (C) is from 1 to 200 parts by weight per 100 parts by weight of the sum of components (A) and (B).

5. A pressure-sensitive tape or pressure-sensitive film comprising a backing and, laminated onto at least one side of the backing, a pressure-sensitive adhesive layer made up of a cured form of a silicone pressure-sensitive adhesive composition of any one of claims 1 to 4.

6. A pressure-sensitive tape or pressure-sensitive film of claim 5 having at least one of the following properties (1) to (3):
(1) in the event that the pressure-sensitive tape or pressure-sensitive film of claim 5 has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, when this pressure-sensitive tape or pressure-sensitive film is pressed against and bonded to the surface of a plastic film or glass plate and stored at 85°C and 85% relative humidity for 20 hours, a 2 mm slit is subsequently inserted at the center on one widthwise edge of the backing of this pressure-sensitive tape or pressure-sensitive film and both lengthwise ends of the pressure-sensitive tape or pressure-sensitive film are held and pulled in the lengthwise direction, the backing tears at the slit without severing of the pressure-sensitive adhesive layer and, even when the pressure-sensitive adhesive layer is then further pulled in the lengthwise direction, lifting of the pressure-sensitive adhesive layer from the backing does not arise;
(2) in the event that the pressure-sensitive tape or pressure-sensitive film of claim 5 has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, when this pressure-sensitive tape or pressure-sensitive film is pressed against and bonded to the surface of a plastic film or glass plate and stored at 85°C and 85% relative humidity for 20 hours, a 2 mm slit is subsequently inserted at the center on one widthwise edge of the backing of this pressure-sensitive tape or pressure-sensitive film and both lengthwise ends of the pressure-sensitive tape or pressure-sensitive film are held and pulled in this lengthwise direction, the backing tears at the slit without severing of the pressure-sensitive adhesive layer and, even when the pressure-sensitive adhesive layer is then further pulled in the lengthwise direction, the amount of elongation of the pressure-sensitive adhesive layer until it breaks is 5 mm or less;
(3) in the event that the pressure-sensitive tape or pressure-sensitive film of claim 5 has a pressure-sensitive adhesive layer with a thickness of 30 µm and, on being pressed against and bonded to a stainless steel plate and then peeled in the 180° direction at 300 mm/min in accordance with JIS Z2037, has an adhesive strength of more than 1 N/25 mm, even when the surface of the pressure-sensitive adhesive layer is scratched and the surface is vigorously rubbed with the fingers, the pressure-sensitive adhesive layer does not fall off.
